# EUROPÄISCHE PATENTSCHRIFT

(11) **EP 2 824 052 B1**
(45) Veröffentlichungstag und Bekanntmachung des Hinweises auf die Patenterteilung: **07.02.2018**
(21) Anmeldenummer: 14175678.3
(22) Anmeldetag: 03.07.2014
(51) Int. Cl.: B65H 51/30, B29C 70/38, B65H 59/38

(54) **Verfahren zum Transport eines flexiblen Quasiendlosmaterials und Anlage dafür**
Method for transporting a flexible quasi-endless material and assembly for the same
Procédé de transport d'un matériau souple quasiment sans discontinuité et installation associée

(30) Priorität: 04.07.2013 DE 102013107039
(43) Veröffentlichungstag der Anmeldung: 14.01.2015
(73) Patentinhaber: Deutsches Zentrum für Luft- und Raumfahrt e.V., 51147 Köln (DE)
(72) Erfinder: Krombholz, Christian, 21614 Buxtehude (DE); Nguyen, Duy Chinh, 21682 Stade (DE)
(74) Vertreter: Günther, Constantin

(56) Entgegenhaltungen:
- BE-A- 546 006
- DE-A1- 4 422 002
- JP-A- S6 330 234
- JP-A- H09 202 533
- JP-A- 2007 009 357
- JP-A- 2010 280 464
- US-A- 5 645 677

## Beschreibung

Die Erfindung betrifft ein Verfahren zum Transport eines flexiblen Quasiendlosmaterials, das im Wesentlichen keine Schubkräfte übertragen kann, von einem Materialvorratsbereich einer Anlage zu einem von dem Materialvorratsbereich entfernten Verarbeitungsort des Materials gemäß Anspruch 1. Die Erfindung betrifft außerdem eine Anlage zum Transport eines solchen Quasiendlosmaterials gemäß Anspruch 3.

Beim Transport eines derartigen flexiblen Quasiendlosmaterials von einem Materialvorratsbereich einer Anlage zu einem von dem Materialvorratsbereich entfernten Verarbeitungsort des Materials können eine Reihe von technischen Problemstellungen auftreten. Als flexibles Quasiendlosmaterial sei dabei jedes Material verstanden, das nur durch Zug voranbewegt werden kann und nicht durch Druckkräfte, weil es im Wesentlichen keine Schub- bzw. Druckkräfte übertragen kann. Insofern erfasst der Begriff des flexiblen Quasiendlosmaterials alle möglichen band- oder seilförmigen Materialien, z.B. Seile, Fäden, Bänder, Folien, Drähte, Textilien, dünne Bleche und ähnliches. Insbesondere umfasst der Begriff bandförmige oder seilförmige Faserpakete (sogenannte Tows), z.B. aus Kohlefaser, Aramidfaser oder Glasfaser sowie Mischungen davon. Der Transport solcher Faserpakete ist z.B. für sogenannte Fiber-Placement-Anlagen von großer Bedeutung. Fiber-Placement-Anlagen werden für die automatische Fertigung von meistens großbauenden Teilen aus Faserverbundwerkstoffen eingesetzt, z.B. um Kohlefaserbauteile für Flugzeuge herzustellen. Beim Betrieb einer solchen Anlage wird ein Fiber-Placement-Verfahren ausgeführt, bei dem z.B. mehrere schmale Materialstreifen gleichzeitig nebeneinander abgelegt werden. Das Material kann bereits mit Binderauftrag oder mit Harz imprägniert sein oder zunächst in einer trocknen Form abgelegt werden und später mit Binderauftrag oder Harz imprägniert werden.

Aus der US 5,645,677 geht eine Maschine zum simultanen Auflegen und Wickeln einer Vielzahl individueller Faserrovinge hervor. Aus der JP 2007009357 geht eine Einrichtung zum Speisen eines Fasermaterials und ein Öffnungsapparat hervor. Aus der JP S6330234 geht ein automatischer Wickelautomat für vorimprägnierte Fasern hervor.

Insbesondere bei Fiber-Placement-Anlagen, aber auch bei verschiedenen anderen Anlagen, bei denen flexibles Quasiendlosmaterial eingesetzt wird, ist ein sauberer Vorwärtstransport des Quasiendlosmaterials zum Verarbeitungsort hin von großer Bedeutung. Es soll nicht zu Verwicklungen, Knotenbildungen, Umschlingungen oder ähnlichem kommen. Bei Faserpaketen ist zusätzlich von großer Bedeutung, dass diese durch den Vorschub zum Verarbeitungsort hin auf ihrem Wege von dem Materialvorratsbereich nicht beschädigt werden, d.h. dass die vorhandene Fasergelege- oder -gewebestruktur möglichst nicht verändert und beschädigt wird.

Der Erfindung liegt die Aufgabe zugrunde, ein hierzu geeignetes Verfahren sowie eine geeignete Anlage anzugeben.

Die Aufgabe wird durch ein Verfahren zum Transport eines flexiblen Quasiendlosmaterials gemäß Anspruch 1 gelöst. Die Erfindung hat den Vorteil, dass auch empfindliches Quasiendlosmaterial sicher und beschädigungsfrei vom Materialvorratsbereich der Anlage zum Verarbeitungsort transportiert werden kann. Das Quasiendlosmaterial erstreckt sich dabei kontinuierlich vom Materialvorratsbereich zu dem Verarbeitungsort hin und wird durch die Vorschubeinrichtung durch Zug voranbewegt. Hierbei wird Material von dem Materialvorratsbereich nachgefördert. Insbesondere kann die Vorschubeinrichtung zeitlich diskontinuierlich betrieben werden, z.B. intermittierend, wie dies bei Fiber-Placement-Anlagen häufig erforderlich ist, um bestimmte Bauteile herzustellen. Durch das Halten einer gewissen Vorspannung mittels der Vorspannungseinrichtung sowie, in Kombination damit, das Vorsehen wenigstens einer zusätzlich zur Vorschubeinrichtung vorhandenen Materialantriebseinrichtung, die sozusagen auf dem Wege des Quasiendlosematerials von dem Materialvorratsbereich zu dem Verarbeitungsort platziert ist, sowie dessen bedarfsgerechte Steuerung zum Antrieb des Quasiendlosmaterials in Vorschubrichtung kann der genannte sichere und beschädigungsfreie Transport auch empfindlichen Quasiendlosmaterials erfolgen. Vorteilhaft wird mittels des zusätzlichen Antriebs über die Materialantriebseinrichtung die Zugspannung in dem Quasiendlosmaterial auf ihrem Wege von dem Materialvorratsbereich zu dem Verarbeitungsort hin gemindert. Durch bedarfsweise Steuerung des zusätzlichen Antriebs des Quasiendlosmaterials durch die Materialantriebseinrichtung kann die unterstützende Wirkung der Materialantriebseinrichtung an den tatsächlichen Vorschubbedarf gekoppelt werden. Der Vorschubbedarf kann dabei vom Verhalten der Vorschubeinrichtung im Bereich des Verarbeitungsorts abgeleitet werden.

Insbesondere bei relativ langen Wegen von dem Materialvorratsbereich zu dem Verarbeitungsort hin können auch an mehreren Stellen jeweils bedarfsweise gesteuerte Materialantriebseinrichtungen vorgesehen werden.

Die Minderung der Zugspannung durch die Materialantriebseinrichtung wird dabei gemäß einer vorteilhaften Weiterbildung der Erfindung derart vorgenommen, dass die Zugspannung auf möglichst kleine positive Zugspannungswerte gemindert wird. Es soll immer eine gewisse Rest-Zugspannung im Quasiendlosmaterial aufrecht erhalten werden, nur soll diese tendenziell möglichst klein sein, d.h. zumindest einen vorgegebenen Grenzwert nicht überschreiten.

Die Vorschubeinrichtung kann z.B. motorgetriebene Transportwalzen aufweisen, die ggf. profiliert sein können. Das Quasiendlosmaterial wird dann durch ein Walzenpaar hindurchgezogen.

Das Quasiendlosmaterial kann im Materialvorratsbereich z.B. auf einer Materialvorratstrommel vorgehalten werden. Bei einem Vorschub des Quasiendlosmaterials wird dieses dann von der Materialvorratstrommel abgerollt. Es können auch andere Arten der Materialspeicherung vorgesehen sein, z.B. ein Vorratsmagazin oder ein Vorratsbehälter für das Quasiendlosmaterial.

Gemäß einer vorteilhaften Weiterbildung der Erfindung ist die Anlage gemäß Anspruch 1 eine Fiber-Placement-Anlage, die zur Herstellung von Faserverbundbauteilen dient. Gerade in solchen Anlagen können durch Anwendung der vorliegenden Erfindung signifikante Verbesserungen erzielt werden. In Fiber-Placement-Anlagen erfolgt, bedingt durch große Freiheitsgrade des Roboters, eine hohe zeitliche Variation des Vorschubs des Quasiendlosmaterials und dementsprechend große Änderungen der Zugspannung im Fasermaterial, unter anderem ausgelöst durch das Bremsmoment an einer Materialvorratstrommel.

Allgemein ist es vorteilhaft, dass das Quasiendlosmaterial mittels der Materialsantriebsrichtung nicht permanent in dessen Vorschubrichtung angetrieben wird, sondern nur bei Bedarf. Dementsprechend muss auch die Materialantriebseinrichtung nicht permanent laufen, sondern kann zum Beispiel nur bei Bedarf eingeschaltet werden oder nur bei Bedarf mit dem Quasiendlosmaterial gekoppelt werden. Insbesondere kann vorgesehen sein, dass das Quasiendlosmaterial nur dann durch die Materialsantriebseinrichtung angetrieben wird, wenn ein Vorschubbedarf des Quasiendlosmaterials im Bereich des Verarbeitungsortes detektiert wird. Zusätzlich oder alternativ kann das Quasiendlosmaterial durch die Materialantriebseinrichtung angetrieben werden, wenn eine im Quasiendlosmaterial auftretende Zugspannung einen Grenzwert überschreitet. Das gilt sowohl für das erfindungsgemäße Verfahren als auch für die nachfolgend noch erläuterte erfindungsgemäße Anlage zum Transport des Quasiendlosmaterials.

Gemäß der Erfindung wird bestimmt, ob ein Vorschubbedarf des Quasiendlosmaterials im Bereich des Verarbeitungsorts vorhanden ist und/oder ob die im Quasiendlosmaterial auftretende Zugspannung einen Grenzwert überschreitet, und nur dann, wenn ein Vorschubbedarf vorhanden ist und/oder wenn die Zugspannung den Grenzwert überschreitet, wird das Quasiendlosmaterial durch die Materialantriebseinrichtung angetrieben. Dies erlaubt eine vorteilhafte bedarfsgerechte Steuerung der Materialantriebseinrichtung, mit der auf einfache und kostengünstig realisierbare Weise der sichere und beschädigungsfreie Transport des Quasiendlosmaterials gewährleistet werden kann. So kann der Vorschubbedarf des Quasiendlosmaterials insbesondere in Fiber-Placement-Anlagen sowie die im Quasiendlosmaterial auftretende Zugspannung einfach und zuverlässig bestimmt werden, wie nachfolgend noch ausgeführt wird.

Gemäß der Erfindung wird ein Vorschubbedarf des Quasiendlosmaterials und/oder in dem Quasiendlosmaterial auftretende Zugspannung durch ein Sensiermittel an dem Quasiendlosmaterial bestimmt. Vorteilhaft können hier einfache und kostengünstige Sensiermittel verwendet werden, wie eine einfache mechanische Sensierung z.B. über einen Massekörper (Gewicht) oder eine Federvorspannung. Besonders kostengünstig kann die erforderliche Information über den Vorschubbedarf bestimmt werden, wenn eine Schnittstelle zu einer Steuerungseinheit der Anlage vorhanden ist oder hergestellt wird. In diesem Fall kann eine in der Anlagensteuerung bereits vorhandene Information für die Steuerung der Materialantriebseinrichtung verwendet werden. Auch eine Kombination eines Sensiermittels mit einer Übertragung von Informationen über eine Schnittstelle ist vorteilhaft. In diesem Fall stehen zwei unabhängig bestimmte Informationen über den Vorschubbedarf des Quasiendlosmaterials bzw. die in dem Quasiendlosmaterial auftretende Zugspannung zur Verfügung. Durch Auswertung beider Informationen kann eine zusätzliche Plausibilisierung der erfassten Daten und damit eine erhöhte Sicherheit beim Transport des Quasiendlosmaterials erreicht werden.

Gemäß einer vorteilhaften Weiterbildung der Erfindung sensiert das Sensiermittel die im Quasiendlosmaterial auftretende Zugspannung an einer Position nahe der Materialantriebseinrichtung. Insbesondere ist die vom Sensiermittel erfasste Position dann entfernt von dem Materialvorratsbereich und/oder dem Verarbeitungsort des Materials angeordnet. So kann die Position der Erfassung durch das Sensiermittel im Bereich weniger Zentimeter bis hin zu 50 cm oder 100 cm Entfernung von der Materialantriebseinrichtung liegen. In Einzelfällen sind auch größere Entfernungen möglich, jedoch häufig nicht sinnvoll.

Gemäß einer vorteilhaften Weiterbildung der Erfindung sensiert das Sensiermittel den Vorschubbedarf und/oder die Zugspannung mit einer Querkraftbeaufschlagung des Quasiendlosmaterials. Die Querkraftbeaufschlagung kann durch das Sensiermittel selbst oder eine mit dem Sensiermittel verbundene Einrichtung, z.B. eine Zug- oder Druckfeder oder ein Massekörper, erfolgen. Durch die Querkraftbeaufschlagung kann insbesondere bei flexiblen Materialien auf einfache Weise ohne Beschädigung des Quasiendlosmaterials eine zuverlässige Vorschubbedarf- und/oder Zugspannungsermittlung erfolgen.

Gemäß der Erfindung wird die Materialantriebseinrichtung hinsichtlich des Antreibens des Quasiendlosmaterials durch eine direkte mechanische Verbindung mit dem zuvor erwähnten Sensiermittel gesteuert. Eine Steuerung durch eine direkte mechanische Verbindung mit dem Sensiermittel hat den Vorteil, dass die Steuerung rein mechanisch erfolgen kann und hierbei auch bereits eine entsprechende Regelung beinhaltet sein kann. Solche mechanischen Steuer- und Regelmittel haben den Vorteil, dass diese einfach und robust zu realisieren sind und unabhängig von einer Stromversorgung sind. Eine Funktion ist dann auch bei einem eventuellen Stromausfall gewährleistet.

Zur Sicherstellung der Vorspannung des Quasiendlosmaterials kann z.B. ein Tänzersystem als Vorspannungseinrichtung eingesetzt werden.

Die eingangs genannte Aufgabe wird außerdem durch eine Anlage zum Transport eines flexiblen Quasiendlosmaterials gemäß Anspruch 3 gelöst. Mit der zuvor angegebenen Anlage können die eingangs bezüglich des erfindungsgemäßen Verfahrens genannten Vorteile realisiert werden.

Gemäß der Erfindung weist die Anlage ein Sensiermittel zum Bestimmen eines Vorschubbedarfs des Quasiendlosmaterials und/oder der im Quasiendlosmaterial auftretenden Zugspannung auf.

Gemäß der Erfindung weist die Anlage eine Steuerung auf, die die Materialantriebseinrichtung nur dann zum Antreiben des Quasiendlosmaterials betätigt, wenn ein Vorschubbedarf vorhanden ist und/oder wenn die Zugspannung den Grenzwert überschreitet.

Das Sensiermittel und die Steuerung sind durch direkte mechanische Verbindungen miteinander gekoppelt. So kann z.B. das Sensiermittel als Massekörper ausgebildet sein, der durch seine Gewichtskraft an einer bestimmten Stelle auf das Quasiendlosmaterial eine Querkraft ausübt. Der Massekörper kann über eine Hebelanordnung, die verschwenkbar aufgehängt ist, mit einer Antriebssteuerung der Materialantriebseinrichtung verbunden sein, z.B. mit einer betätigbaren Kupplungseinrichtung.

Die Materialantriebseinrichtung kann hinsichtlich ihrer Funktion zum Antreiben des Quasiendlosmaterials auf verschiedene Art gesteuert bzw. betätigt werden. So kann die Materialantriebseinrichtung z.B. einen Motor aufweisen, z.B. einen Elektromotor, der nur bei Vorschubbedarf eingeschaltet wird. Gemäß einer vorteilhaften Weiterbildung der Erfindung weist die Materialantriebseinrichtung einen Motor und eine betätigbare Kupplungseinrichtung auf, durch die das Quasiendlosmaterial bedarfsweise mit dem Motor koppelbar ist. Die Kopplung mit dem Motor erfolgt in der Regel indirekt, d.h. das Quasiendlosmaterial kann z.B. mit einem vom Motor angetriebenen Antriebsrad gekoppelt werden, oder eine Rolle, über die das Quasiendlosmaterial läuft, wird mit dem Motor oder einem vom Motor angetriebenen Antriebsrad gekoppelt. Bei Verwendung der Kupplungseinrichtung kann der Motor z.B. permanent laufen, und die bedarfsweise Unterstützung durch die Materialantriebseinrichtung wird durch Betätigung oder Nichtbetätigung der Kupplungseinrichtung gesteuert.

Die Kupplungseinrichtung kann auf verschiedene Art ausgebildet sein. Die Kupplungseinrichtung kann insbesondere einen rutschenden oder gleitenden Kraftübertragungsbereich aufweisen, d.h. einen Bereich, in dem ein gewisser Schlupf zwischen einem vom Motor betriebenen Antriebskörper und dem Quasiendlosmaterial nach Art einer Rutschkupplung vorliegt. Dies hat den Vorteil, dass keine besondere Regelung des Motors erforderlich ist. Dieser kann mit konstanter Antriebsgeschwindigkeit bzw. Antriebsdrehzahl laufen. Eine bedarfsweise Anpassung an den Vorschubbedarf des Quasiendlosmaterials kann dann durch rutschendes Einkuppeln der Kupplungseinrichtung erfolgen.

Gemäß einer vorteilhaften Weiterbildung der Erfindung ist das Sensiermittel über einen verschwenkbaren Hebelmechanismus mit der Kupplungseinrichtung mechanisch gekoppelt. Hierdurch kann eine einfache, robuste und kostengünstige mechanische Realisierung einer bedarfsweise nur bei Vorschubbedarf wirkenden Materialantriebseinrichtung sowie einer Sensierung des Vorschubbedarfs realisiert werden.

Gemäß einer vorteilhaften Weiterbildung der Erfindung ist die Anlage zur Durchführung des Verfahrens der zuvor erläuterten Art eingerichtet.

Die Erfindung wird nachfolgend anhand von Ausführungsbeispielen unter Verwendung von Zeichnungen näher erläutert.

### Es zeigen:

- Figur 1: - eine Fiber-Placement-Anlage in schematischer Darstellung und
- Figuren 2 und 3: - eine erste Ausführungsform einer rein mechanischen Steuerung einer Materialantriebseinrichtung und
- Figuren 4 und 5: - eine zweite Ausführungsform einer rein mechanischen Steuerung einer Materialantriebseinrichtung und
- Figur 6: - eine nicht-erfindungsgemäße elektronische Steuerung einer Materialantriebseinrichtung.

In den Figuren werden gleiche Bezugszeichen für einander entsprechende Elemente verwendet.

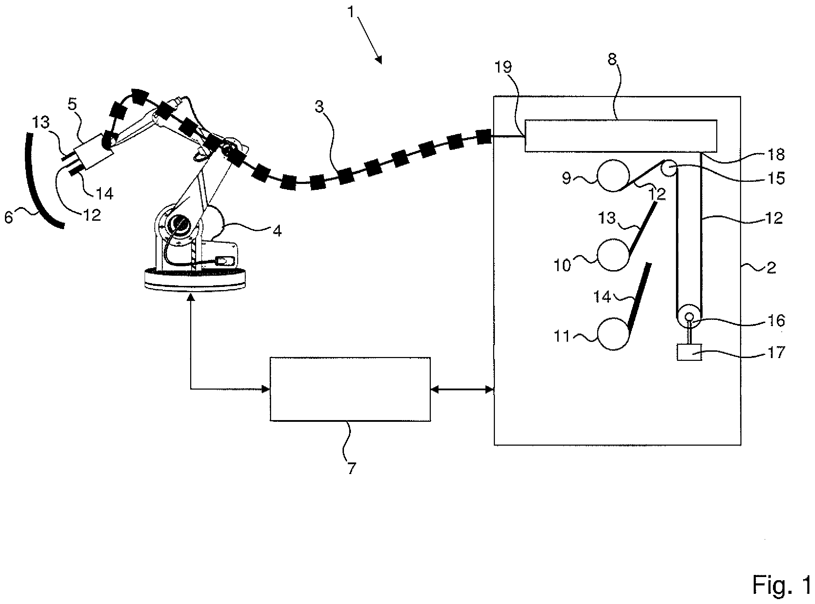

Die in Figur 1 dargestellte Fiber-Placement-Anlage 1 weist einen Roboter 4, eine elektronische Steuerungseinheit 7 sowie eine Materialvorratseinheit 2 auf. In der Materialvorratseinheit 2 sind eine Vielzahl von zu verarbeitenden Faserpaketen (Tows) auf Materialvorratstrommeln 9 vorgehalten. Beispielhaft sind drei Materialvorratstrommeln 9, 10, 11 dargestellt, in der Praxis können wesentlich mehr Materialvorratstrommeln mit unterschiedlichen Fasermaterialien vorhanden sein. Die auf den Materialvorratstrommeln 9, 10, 11 aufgewickelten Faserpakete 12, 13, 14 stellen dabei jeweils ein Quasiendlosmaterial dar, das nur durch Zugbelastung abgewickelt werden kann, aber im Wesentlichen keine Schubkräfte übertragen kann. Im dargestellten Beispiel seien Faserpakete 12, 13, 14 unterschiedlicher Breite auf den unterschiedlichen Materialvorratstrommeln 9, 10, 11 vorgehalten. Um eine ausreichende Vorspannung in den Quasiendlosmaterialien 12, 13, 14 sicherzustellen, sind diese Quasiendlosmaterialien 12, 13, 14 jeweils über eine Vorspannungseinrichtung in Form eines Tänzersystems 16, 17 geführt. Dies ist in der Figur 1 aus Gründen der Übersichtlichkeit nur für das Quasiendlosmaterial 12 der Materialvorratstrommel 9 dargestellt. Für die übrigen Quasiendlosmaterialien 13, 14 sind vergleichbare jeweils unabhängige Vorspannungseinrichtungen vorhanden, z.B. in Form von neben dem Tänzersystem 16, 17 angeordneten Tänzersystemen.

Das Tänzersystem 16, 17 wird durch eine drehbare Rolle 16 und einem daran aufgehängten Gewicht 17 gebildet. Das Quasiendlosmaterial 12 wird von der Materialvorratstrommel 9 zunächst über eine Rolle 15 und dann durch die frei hängende Rolle 16 geführt. Von der Rolle 16 wird das Quasiendlosmaterial 12 dann durch eine in Figur 1 zunächst nur als Kasten symbolisierte Einrichtung 8 geführt, wo das Quasiendlosmaterial 12 an einer Eintrittsstelle 18 eintritt und an einer Austrittsstelle 19 wieder austritt. Von der Austrittsstelle 19 wird das Quasiendlosmaterial zu einem Verarbeitungsort geführt, der sich an einem Arbeitskopf 5 des Roboters 4 befindet. Am Arbeitskopf 5 befindet sich auch eine Vorschubeinrichtung, durch die das Quasiendlosmaterial 12 durch Zug vorangetrieben werden kann, dabei von der Materialvorratstrommel 9 abgerollt wird und von dem Roboter 4 an einer gewünschten Stelle eines zu fertigenden Bauteils 6 platziert werden kann. Auf dem ggf. mehrere Meter langen Weg von der Materialvorratseinheit 2 zu dem Arbeitskopf 5 hin wird das Quasiendlosmaterial 12 über eine Einrichtung 3 geführt und darin gestützt. Die Einrichtung 3 kann z.B. als Rohr, Schlauch oder ähnliches ausgebildet sein. In einer vorteilhaften Ausgestaltung ist die Einrichtung 3 als offenes System in Form einer Gliederkette ausgebildet. Die Quasiendlosmaterialien werden darin über Rollen, die sich in den einzelnen Gliedern der Gliederkette befinden, geführt. Die offene Ausführungsform hat den Vorteil, dass Irregularitäten, wie z.B. Materialverstopfungen, leicht von außen erkannt werden können. Mittels der Erfindung kann insbesondere innerhalb der Gliederkette die im Quasiendlosmaterial auftretende Zugspannung verringert werden.

Wie in der Figur 1 erkennbar ist, treten am Arbeitskopf 5 des Roboters 4 auch die anderen Quasiendlosmaterialien 13, 14 aus. Diese werden in gleicher Weise wie zuvor für das Quasiendlosmaterial 12 erläutert zu dem Arbeitskopf 5 hingeführt. Für jedes Quasiendlosmaterial ist dabei in einer vorteilhaften Ausgestaltung der Erfindung eine jeweils eigene Einrichtung 8 vorhanden. Die Einrichtung 8 dient zur Zugspannungsminderung des Quasiendlosmaterials und kann auf verschiedene Arten ausgeführt werden, wie nachfolgend noch erläutert wird.

Die elektronische Steuerungseinheit 7 dient zur Steuerung des Roboters 4. Die elektronische Steuerungseinheit 7 weist daher ein Steuerungsprogramm zur Steuerung des Roboters 4 auf. Zusätzlich kann die elektronische Steuerungseinheit 7 auch zur Steuerung von Komponenten der Materialvorratseinheit 2 verwendet werden, wie nachfolgend noch erläutert wird.

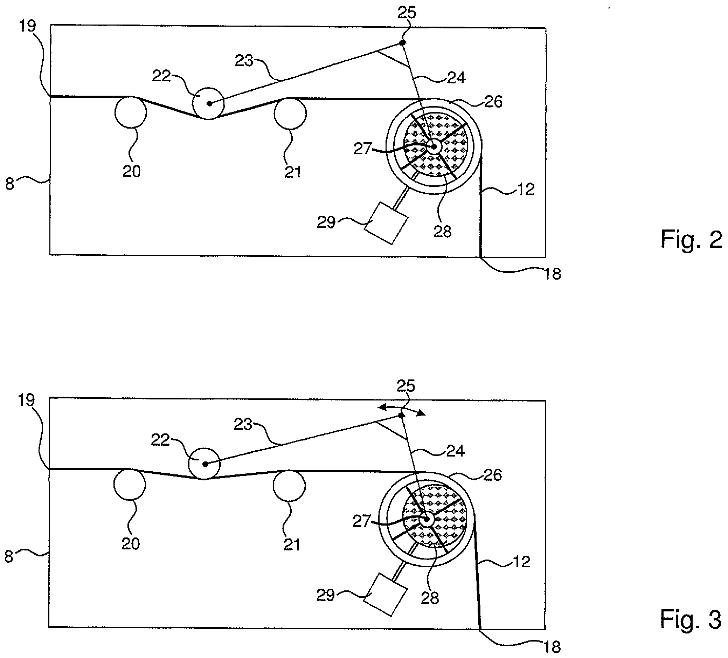

Die Figuren 2 und 3 zeigen eine erste Ausführungsform der Einrichtung 8 in verschiedenen Betriebszuständen. Im Zustand gemäß Figur 2 besteht kein Vorschubbedarf, d.h. die Vorschubeinrichtung bewegt das Quasiendlosmaterial 12 nicht voran. Gemäß Figur 3 ist ein Vorschubbedarf vorhanden, d.h. durch die Vorschubeinrichtung wird durch Zug das Quasiendlosmaterial 12 in Vorschubrichtung, d.h. von der Eintrittsstelle 18 zur Austrittsstelle 19 hin, voranbewegt.

Die Einrichtung 8 gemäß den Figuren 2 und 3 weist zwei drehbare Rollen 20, 21 auf, über die das Quasiendlosmaterial 12 geführt wird. In einem Bereich zwischen den Rollen 20, 21 ist eine an einem Hebelarm 23 befestigte drehbare Rolle 22 angeordnet, die aufgrund ihrer Gewichtskraft auf den Quasiendlosmaterial 12 von oben aufliegt und dieses, weil aktuell kein Vorschub des Quasiendlosmaterials erfolgt, zu einem gewissen Grad herunterdrückt und damit mit einer Querkraft belastet. Die Rolle 22 dient dabei selbst als Massekörper oder kann zusätzlich mit einem Massekörper beschwert sein, um ein für die Funktion notwendiges Gewicht bereitzustellen. Der Hebelarm 23 ist mit einem Hebelarm 24 starr verbunden. Die aus den Hebelarmen 23, 24 gebildete Hebelanordnung ist an einem Drehpunkt 25 drehbar, d.h. verschwenkbar, aufgehängt. An dem Hebelarm 24 ist an dem vom Drehpunkt 25 entfernten Ende ein Rad 26 drehbar befestigt. Das Rad 26 ist z.B. über Speichen mit einer Nabe 27, die drehbar an dem Hebelarm 24 befestigt ist, verbunden. Das Quasiendlosmaterial 12 ist, wie in den Figuren 2 und 3 erkennbar, über einen gewissen Winkelbereich von z.B. ungefähr 90° über das Rad 26 geführt und liegt daran an. Innerhalb des Rades 26 befindet sich ein Antriebsrad 28, das über einen Motor 29 zu einer Drehbewegung angetrieben wird. Im vorliegenden Beispiel sei angenommen, dass der Motor 29 das Antriebsrad 28 permanent mit einer bestimmten vorgegebenen Drehzahl rotieren lässt. Die Rotationsrichtung entspricht dabei der Vorschubrichtung des Quasiendlosmaterials.

Durch die verschwenkbare Aufhängung der Hebelanordnung 23, 24 erfolgt bei einem Übergang vom Nicht-Vorschub-Fall (Figur 2) in den Vorschub-Fall (Figur 3) ein Anheben der Rolle 22 entgegen ihrer Gewichtskraft, und zwar in Folge einer ansteigenden Zugspannung im Quasiendlosmaterial. Hierdurch wird auch die Position des Rades 26 gegenüber dem Antriebsrad 28 geändert, wobei deren Positionen derart ausgelegt sind, dass bei Erreichen einer vorbestimmten Zugspannung im Quasiendlosmaterial, die nicht überschritten werden soll, das Rad 26 in Berührung mit dem Antriebsrad 28 kommt und damit einen Reibschluss erzeugt. Hierdurch wird eine betätigbare Kupplung zwischen dem Antriebsrad 28 und dem Rad 26 gebildet. Im eingekuppelten Fall, wie in Figur 3 dargestellt, überträgt somit das Antriebsrad 28 seine Rotationsbewegung auf das Rad 26. Das Rad 26 treibt somit das Quasiendlosmaterial 12 an und verringert dadurch die im Quasiendlosmaterial 12 auftretende Zugspannung.

Sobald der Vorschubbedarf des Quasiendlosmaterials am Arbeitskopf 5 des Roboters 4 endet oder geringer wird, wird dies durch die Hebelanordnung 23, 24 mit der als Massekörper dienenden Rolle 22 automatisch erfasst, weil dann aufgrund der Gewichtskraft der Rolle 22 diese wiederum etwas tiefer sinkt, wie in Figur 2 dargestellt, was wiederum zu einem Entkoppeln des Rades 26 von dem Antriebsrad 28 führt. Wie man erkennt, fungiert die Rolle 22 hierbei zugleich als mechanisches Sensiermittel zur Erfassung des Vorschubbedarfs bzw. der Zugspannung.

Hierdurch kann auch eine automatische Regelung der Zugspannung im Quasiendlosmaterial durchgeführt werden, weil es bei Erreichen der gewünschten Zugspannung bei geeigneter Platzierung des Antriebsrades 28 gegenüber dem Rad 26 zu einem schleifenden oder rutschenden Antrieb des Rades 26 durch das Antriebsrad 28 kommen kann. Es wird somit automatisch und durch rein mechanische Regelung immer eine gewisse gewünschte Zugspannung im Quasiendlosmaterial sichergestellt.

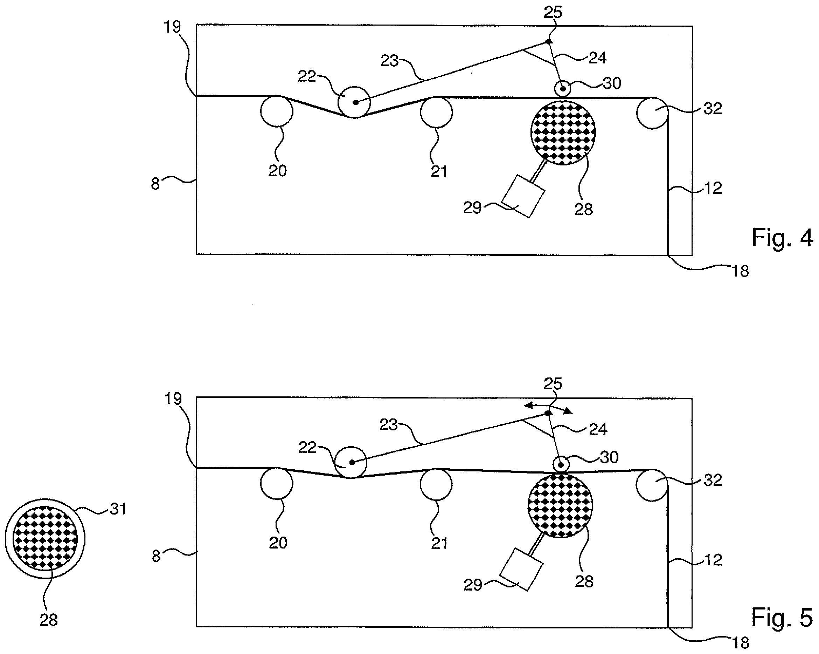

Die Figuren 4 und 5 zeigen eine alternative Ausführungsform der Einrichtung 8, bei der ähnlich wie zuvor erläutert die Regelung der Zugspannung im Quasiendlosmaterial auf rein mechanische Weise erfolgt. Bei der Hebelanordnung 23, 24 gemäß den Figuren 4 und 5, die wiederum um einen Drehpunkt 25 verschwenkbar aufgehängt ist, befindet sich am Ende des Hebelarms 24 eine drehbare Rolle 30, die eine Funktion als Andruckrolle erfüllt. Mittels der Andruckrolle 30 wird das Quasiendlosmaterial 12 gegen das Antriebsrad 28 gedrückt, wenn, wie in Figur 5 erkennbar, ein Vorschubbedarf des Quasiendlosmaterials besteht und dementsprechend die Rolle 22 angehoben wird. Wenn kein Vorschubbedarf besteht, wie in Figur 4 dargestellt, sinkt die Rolle 22 tiefer, und dementsprechend drückt die Andruckrolle 30 das Quasiendlosmaterial 12 nicht gegen das Antriebsrad 28. Auf diese Weise wird eine vorteilhafte alternative Ausführungsform einer betätigbaren Kupplungseinrichtung, mit der das Quasiendlosmaterial an das Antriebsrad 28 angekoppelt werden kann, realisiert. Wenn das Antriebsrad 28 mit dem Quasiendlosmaterial 12 in Kontakt ist, treibt es das Quasiendlosmaterial in Vorschubrichtung an und führt somit zu einer Verminderung der Zugspannung im Quasiendlosmaterial hinter dem Antriebsrad 28.

Das Antriebsrad 28 kann grundsätzlich aus einem beliebigen Material gefertigt werden, z.B. aus Metall oder Kunststoff. An seiner äußeren Umfangsseite kann das Antriebsrad 28, um einen definierten Reibkoeffizienten mit dem Quasiendlosmaterial zu erzielen, z.B. mit einer Ummantelung bzw. Beschichtung 31 versehen sein, wie in Figur 5 links neben der Einrichtung 8 dargestellt ist. Durch eine solche Ummantelung 31 kann ein Reibkoeffizient mit dem Fasermaterial hergestellt werden, der übermäßigen Schlupf zwischen dem Antriebsrad 28 und dem Fasermaterial bzw. allgemein dem Quasiendlosmaterial 12 vermeidet, so dass im Endeffekt eine Geschwindigkeitsdifferenz von etwa 0 vorliegt. Auf diese Weise kann ein unerwünschter Wärmeeintrag in das Quasiendlosmaterial, wie er im Fall einer rutschenden Verbindung auftreten könnte, vermieden werden.

Bei der Ausführungsform gemäß den Figuren 2 und 3 ist eine solche Ummantelung 31 nicht unbedingt erforderlich, kann aber z.B. zur Herstellung eines definierten Reibwertes dennoch an dem Rad 26 am Außenumfang vorgesehen werden.

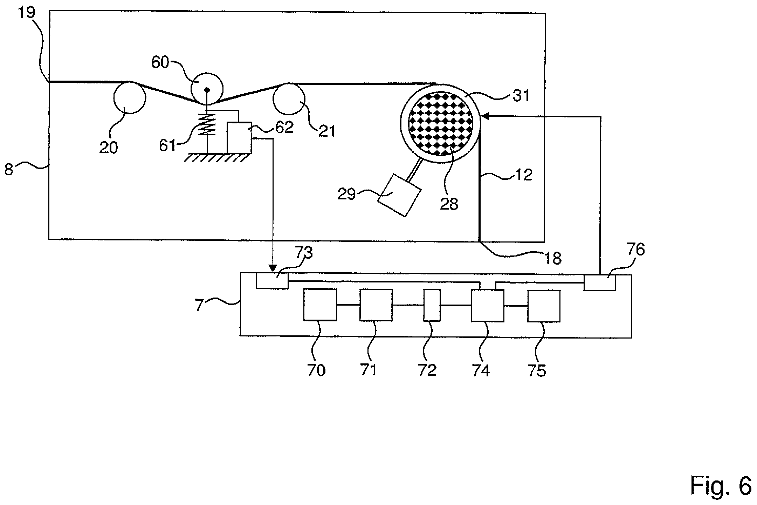

Die Figur 6 zeigt eine nicht-erfindungsgemäße Ausführungsform der Einrichtung 8, bei der die Steuerung des bedarfsweisen Antriebs des Quasiendlosmaterials durch die Materialantriebseinrichtung elektronisch gesteuert wird. Hierfür ist eine elektronische Steuereinheit vorgesehen, die z.B. die elektronische Steuereinheit 7 der gesamten Anlage sein kann, oder eine separate Steuereinheit. Nachfolgend sei angenommen, dass die Steuerung der Materialantriebseinrichtung integriert ist in die Steuereinheit 7 der gesamten Anlage. Die elektronische Steuerung der Materialantriebseinrichtung erfolgt durch elektrische Betätigung des Motors 29, der als Elektromotor ausgebildet ist, z.B. als Schrittmotor. Der Motor 29 wird von der elektronischen Steuereinheit 7 über eine Schnittstelle 76 angesteuert. Für die Steuerung des Motors 29 und damit der Antriebsfunktion der Materialantriebseinrichtung sind in der elektronischen Steuereinheit 7 ein Rechner 74 und ein Speicher 75 vorgesehen. Im Speicher 75 ist ein Computerprogramm gespeichert, das die entsprechende Steuerung des Motors 29 abhängig von Eingangsgrößen softwaremäßig durchführt. Der Rechner 74, der z.B. als Mikroprozessor, Mikrocontroller, FPGA oder ähnliches ausgebildet sein kann, arbeitet das Computerprogramm ab und führt dabei entsprechende Steuer- und Regelfunktionen bezüglich der Materialantriebseinrichtung durch. Der Rechner 74 kann wahlweise entsprechende Eingangsgrößen für seine Steuer- und Regelfunktionen über eine interne Schnittstelle 72 oder über eine mit einem externen Sensiermittel 63 verbundenen Schnittstelle 73 erhalten. Gegebenenfalls können auch beide Schnittstellen vorhanden sein, so dass der Rechner 74 zwei Eingangsgrößen erhält, die er entweder als redundante Signale auswerten kann oder zur gegenseitigen Plausibilisierung der Eingangssignale verwenden kann.

Die interne Schnittstelle 72 ist als Datenschnittstelle zu einem Rechner 71 ausgebildet, der ein in einem Speicher 70 gespeichertes Computerprogramm ausführt. Das Computerprogramm im Speicher 70 dient zur Steuerung des Roboters 4. Durch Abarbeitung des Programms im Speicher 70 weiß der Rechner 71 sozusagen implizit, wann ein Vorschubbedarf in der Vorschubeinrichtung des Robotors 4 vorliegt, da der Rechner 71 dieses selbst steuert. Der Rechner 71 kann entsprechende Informationen über den Vorschubbedarf über die Schnittstelle 72 dem Rechner 74 mitteilen, der dies dann direkt zur Steuerung der Materialantriebseinrichtung verwenden kann. Wie in der Figur 6 erkennbar ist, können der Speicher 70, der Rechner 71 und die Schnittstelle 72 Bestandteile der Steuereinheit 7 sein.

Über die Schnittstelle 73 werden Signale von einem Sensiermittel 63 empfangen, das z.B. als Wegsensor ausgebildet sein kann. Im in Figur 6 dargestellten Beispiel ist eine Rolle 60 vorhanden, die mittels einer vorgespannten Feder 61 gegen das Quasiendlosmaterial 12 gedrückt wird und damit eine Querkraft auf das Quasiendlosmaterial 12 ausübt. Diese Anordnung hat gegenüber der Schwerkraft abhängigen Sensierung der Ausführungsformen der Figuren 2 bis 5 den Vorteil, dass die Sensierung der Zugspannung im Quasiendlosmaterial bzw. des Vorschubbedarfs lageunabhängiger erfolgen kann, d.h. die in Figur 6 dargestellte Einheit aus der Rolle 60 und der vorgespannten Feder 61 könnte auch umgekehrt sozusagen über Kopf montiert sein. Über den Wegsensor 63 wird die Auslenkung der Feder 61 direkt als Wegmaß sensiert und über die Schnittstelle 73 dem Rechner 74 mitgeteilt. Über diese Eingangsinformation kann der Rechner 74 ebenfalls einen Vorschubbedarf des Quasiendlosmaterials erkennen und entsprechend bedarfsweise die Materialantriebseinrichtung betätigen, d.h. den Elektromotor 29 einschalten. Der Rechner 74 kann auch für eine Geschwindigkeitssteuerung des Motors 29 ausgebildet sein, z.B. durch entsprechende Programmierung des Computerprogramms. Es kann eine entsprechende Geschwindigkeitsanpassung des Antriebsrads 28 an die tatsächliche Vorschubgeschwindigkeit des Quasiendlosmaterials vorgenommen werden. Bei Unterbrechungen des Vorschubs kann durch entsprechende Steuerung des Motors 29 ein softwaremäßiger Sanftanlauf und eine sanfte Abbremsung des Antriebsrads 28 realisiert werden.

Gemäß einer vorteilhaften Weiterbildung der Erfindung ist das Gewicht der Rolle 22 größer als die Summe des Gewichts der Rolle 16 und des Massekörpers 17, z.B. wenigstens 10 % oder wenigstens 20 % größer.

## Patentansprüche

1. Verfahren zum Transport eines flexiblen Quasiendlosmaterials (12, 13, 14), das im Wesentlichen keine Schubkräfte übertragen kann, von einem Materialvorratsbereich (2) einer Anlage (1) zu einem von der Materialvorratsbereich (2) entfernten Verarbeitungsort (5) des Quasiendlosmaterials, wobei das Quasiendlosmaterial (12, 13, 14) mittels einer sich im Bereich des Verarbeitungsorts (5) des Quasiendlosmaterials befindenden Vorschubeinrichtung durch Zug in einer Vorschubrichtung voranbewegt wird und dabei aus dem Materialvorratsbereich (2) entnommen wird, wobei das Quasiendlosmaterial (12, 13, 14) durch eine sich im Bereich des Materialvorratsbereichs (2) befindende Vorspannungseinrichtung (16, 17) unter einer gewissen Vorspannung gehalten wird, wobei das Quasiendlosmaterial (12, 13, 14) mittels wenigstens einer zwischen der Vorschubeinrichtung und der Vorspannungseinrichtung (16, 17) angeordneten Materialantriebseinrichtung (26, 27, 28, 29, 30) bedarfsweise in dessen Vorschubrichtung angetrieben wird, **dadurch gekennzeichnet, dass** durch ein mechanisches Sensiermittel bestimmt wird, ob ein Vorschubbedarf des Quasiendlosmaterials (12, 13, 14) im Bereich des Verarbeitungsorts (5) vorhanden ist und/oder ob die im Quasiendlosmaterial (12, 13, 14) auftretende Zugspannung einen Grenzwert überschreitet, und nur dann, wenn ein Vorschubbedarf vorhanden ist und/oder wenn die Zugspannung den Grenzwert überschreitet, das Quasiendlosmaterial (12, 13, 14) durch die Materialantriebseinrichtung (26, 27, 28, 29, 30) angetrieben wird, wobei die Materialantriebseinrichtung (26, 27, 28, 29, 30) hinsichtlich des Antreibens des Quasiendlosmaterials (12, 13, 14) durch direkte mechanische Verbindung mit dem mechanischen Sensiermittel (22) gesteuert wird.

2. Verfahren nach Anspruch 1, **dadurch gekennzeichnet, dass** das Sensiermittel (20) den Vorschubbedarf und/oder die Zugspannung mit einer Querkraftbeaufschlagung des Quasiendlosmaterials (12, 13, 14) sensiert.

3. Anlage (1) zum Transport eines flexiblen Quasiendlosmaterials (12, 13, 14), das im Wesentlichen keine Schubkräfte übertragen kann, von einem Materialvorratsbereich (2) zu einem von dem Materialvorratsbereich (2) entfernten Verarbeitungsort (5) des Quasiendlosmaterials (12, 13, 14), wobei die Anlage (1) eine sich im Bereich des Verarbeitungsorts (5) des Quasiendlosmaterials (12, 13, 14) befindende Vorschubeinrichtung zum Voranbewegen des Quasiendlosmaterials (12, 13, 14) durch Zug in einer Vorschubrichtung und eine sich im Bereich des Materialvorratsbereichs (2) befindende Vorspannungseinrichtung (16, 17) zum Halten des Quasiendlosmaterials (12, 13, 14) unter einer gewissen Vorspannung aufweist, wobei zwischen der Vorschubeinrichtung und der Vorspannungseinrichtung (16, 17) wenigstens eine Materialantriebseinrichtung (26, 27, 28, 29, 30) angeordnet ist, die das Quasiendlosmaterial (12, 13, 14) bedarfsweise in dessen Vorschubrichtung antreiben kann, **dadurch gekennzeichnet, dass** ein mechanisches Sensiermittel (22) zum Bestimmen eines Vorschubbedarfs des Quasiendlosmaterials (12, 13, 14) und/oder der im Quasiendlosmaterial (12, 13, 14) auftretenden Zugspannung vorhanden ist, wobei eine Steuerung vorhanden ist, die die Materialantriebseinrichtung (26, 27, 28, 29, 30) nur dann zum Antreiben des Quasiendlosmaterials (12, 13, 14) betätigt, wenn ein Vorschubbedarf vorhanden ist und/oder wenn die Zugspannung den Grenzwert überschreitet, und das mechanische Sensiermittel (22) und die Steuerung durch direkte mechanische Verbindung miteinander gekoppelt sind.

4. Anlage nach Anspruch 3, **dadurch gekennzeichnet, dass** die Materialantriebseinrichtung (26, 27, 28, 29, 30) einen Motor (29) und eine betätigbare Kupplungseinrichtung aufweist, durch die das Quasiendlosmaterial bedarfsweise mit dem Motor (29) koppelbar ist.

5. Anlage nach Anspruch 4, **dadurch gekennzeichnet, dass** das Sensiermittel (22) über einen verschwenkbaren Hebelmechanismus (23, 24) mit der Kupplungseinrichtung mechanisch gekoppelt ist.

## Claims

1. Method for transporting a flexible quasi-endless material (12, 13, 14) which substantially cannot transmit any shearing forces, from a material supply region (2) of a system (1) to a processing location (5) of the quasi-endless material, which processing location (5) is remote from the material supply region (2), the quasi-endless material (12, 13, 14) being moved forward in an advancing direction by way of tension by means of an advancing device which is situated in the region of the processing location (5) of the quasi-endless material, and the said quasi-endless material (12, 13, 14) being removed here from the material supply region (2), the quasi-endless material (12, 13, 14) being held under a certain prestress by way of a prestressing device (16, 17) which is situated in the region of the material supply region (2), the quasi-endless material (12, 13, 14) being driven as required in its advancing direction by means of at least one material drive device (26, 27, 28, 29, 30) which is arranged between the advancing device and the prestressing device (16, 17), **characterized in that** a mechanical sensing means determines whether there is an advancing requirement of the quasi-endless material (12, 13, 14) in the region of the processing location (5), and/or whether the tensile stress which occurs in the quasi-endless material (12, 13, 14) exceeds a limit value, and, only when there is an advancing requirement and/or when the tensile stress exceeds the limit value, the quasi-endless material (12, 13, 14) is driven by way of the material drive device (26, 27, 28, 29, 30), the material drive device (26, 27, 28, 29, 30) being controlled by way of a direct mechanical connection with the mechanical sensing means (22) with regard to the drive of the quasi-endless material (12, 13, 14).

2. Method according to Claim 1, **characterized in that** the sensing means (20) senses the advancing requirement and/or the tensile stress by way of a transverse force loading of the quasi-endless material (12, 13, 14).

3. System (1) for transporting a flexible quasi-endless material (12, 13, 14) which substantially cannot transmit any shearing forces, from a material supply region (2) to a processing location (5) of the quasi-endless material (12, 13, 14), which processing location (5) is remote from the material supply region (2), the system (1) having an advancing device which is situated in the region of the processing location (5) of the quasi-endless material (12, 13, 14) for moving the quasi-endless material (12, 13, 14) forward in an advancing direction by way of tension, and a prestressing device (16, 17) which is situated in the region of the material supply region (2) for holding the quasi-endless material (12, 13, 14) under a certain prestress, at least one material drive device (26, 27, 28, 29, 30) being arranged between the advancing device and the prestressing device (16, 17), which material drive device (26, 27, 28, 29, 30) can drive the quasi-endless material (12, 13, 14) as required in its advancing direction, **characterized in that** there is a mechanical sensing means (22) for determining an advancing requirement of the quasi-endless material (12, 13, 14) and/or the tensile stress which occurs in the quasi-endless material (12, 13, 14), there being a controller which actuates the material drive device (26, 27, 28, 29, 30) for driving the quasi-endless material (12, 13, 14) only when there is an advancing requirement and/or when the tensile stress exceeds the limit value, and the mechanical sensing means (22) and the controller being coupled to one another by way of a direct mechanical connection.

4. System according to Claim 3, **characterized in that** the material drive device (26, 27, 28, 29, 30) has a motor (29) and an actuatable clutch device, by way of which the quasi-endless material can be coupled as required to the motor (29).

5. System according to Claim 4, **characterized in that** the sensing means (22) is coupled mechanically to the clutch device via a pivotable lever mechanism (23, 24).

## Revendications

1. Procédé de transport d'un matériau quasiment sans fin flexible (12, 13, 14) qui ne peut essentiellement transférer aucune force de poussée, d'une région de stockage de matériau (2) d'une installation (1) à un site de traitement (5) du matériau quasiment sans fin éloigné de la zone de stockage de matériau (2), le matériau quasiment sans fin (12, 13, 14) étant avancé au moyen d'un dispositif d'avance se trouvant dans la région du site de traitement (5) du matériau quasiment sans fin par traction dans une direction d'avance et étant dans ce cas prélevé de la zone de stockage de matériau (2), le matériau quasiment sans fin (12, 13, 14) étant retenu avec une certaine précontrainte par un dispositif de précontrainte (16, 17) se trouvant dans la région de la région de stockage de matériau (2), le matériau quasiment sans fin (12, 13, 14) étant entraîné au besoin dans sa direction d'avance au moyen d'au moins un dispositif d'entraînement de matériau (26, 27, 28, 29, 30) disposé entre le dispositif d'avance et le dispositif de précontrainte (16, 17), **caractérisé en ce que** l'on détermine, par un moyen de détection mécanique, s'il existe un besoin d'avance du matériau quasiment sans fin (12, 13, 14) dans la région du site de traitement (5) et/ou si la tension de traction produite dans le matériau quasiment sans fin (12, 13, 14) dépasse une valeur limite, et seulement s'il existe un besoin d'avance et/ou que la tension de traction dépasse la valeur limite, le matériau quasiment sans fin (12, 13, 14) est entraîné par le dispositif d'entraînement de matériau (26, 27, 28, 29, 30), le dispositif d'entraînement de matériau (26, 27, 28, 29, 30) étant commandé en ce qui concerne l'entraînement du matériau quasiment sans fin (12, 13, 14) par une liaison mécanique directe avec le moyen de détection mécanique (22) .

2. Procédé selon la revendication 1, **caractérisé en ce que** le moyen de détection (20) détecte le besoin d'avance et/ou la tension de traction avec une sollicitation par force transversale du matériau quasiment sans fin (12, 13, 14).

3. Installation (1) pour le transport d'un matériau quasiment sans fin flexible (12, 13, 14) qui ne peut essentiellement transférer aucune force de poussée, d'une région de stockage de matériau (2) à un site de traitement (5) du matériau quasiment sans fin (12, 13, 14) éloigné de la zone de stockage de matériau (2), l'installation (1) présentant un dispositif d'avance se trouvant dans la région du site de traitement (5) du matériau quasiment sans fin (12, 13, 14) pour faire avancer le matériau quasiment sans fin (12, 13, 14) par traction dans une direction d'avance et un dispositif de précontrainte (16, 17) se trouvant dans la région de la région de stockage de matériau (2) pour retenir le matériau quasiment sans fin (12, 13, 14) avec une certaine précontrainte, au moins un dispositif d'entraînement de matériau (26, 27, 28, 29, 30) étant disposé entre le dispositif d'avance et le dispositif de précontrainte (16, 17), lequel peut entraîner le matériau quasiment sans fin (12, 13, 14) au besoin dans sa direction d'avance, **caractérisée en ce qu'**un moyen de détection mécanique (22) est prévu pour déterminer un besoin d'avance du matériau quasiment sans fin (12, 13, 14) et/ou la tension de traction se produisant dans le matériau quasiment sans fin (12, 13, 14), une commande étant prévue, laquelle actionne le dispositif d'entraînement de matériau (26, 27, 28, 29, 30) pour l'entraînement du matériau quasiment sans fin (12, 13, 14) seulement s'il existe un besoin d'avance et/ou si la tension de traction dépasse la valeur limite, et le moyen de détection mécanique (22) et la commande étant accouplés l'un à l'autre par liaison mécanique directe.

4. Installation selon la revendication 3, **caractérisée en ce que** le dispositif d'entraînement de matériau (26, 27, 28, 29, 30) présente un moteur (29) et un dispositif d'accouplement actionnable par le biais duquel le matériau quasiment sans fin peut être accouplé au besoin au moteur (29).

5. Installation selon la revendication 4, **caractérisée en ce que** le moyen de détection (22) est accouplé mécaniquement au dispositif d'accouplement par le biais d'un mécanisme de levier pivotant (23, 24).
